# EUROPEAN PATENT APPLICATION

(11) **EP 4 560 530 A1**
(43) Date of publication of application: **28.05.2025**
(21) Application number: 23845041.5
(22) Date of filing: 26.05.2023
(51) Int. Cl.: G06N 3/04

(54) **DATA PROCESSING METHOD, AND APPARATUS**

(30) Priority: 28.07.2022 CN 202210895071
(71) Applicant: Huawei Technologies Co., Ltd., Shenzhen, Guangdong 518129 (CN)
(72) Inventor: LIU, Baoqing, Shenzhen, Guangdong 518129 (CN); HE, Leijun, Shenzhen, Guangdong 518129 (CN); HU, Dingsheng, Shenzhen, Guangdong 518129 (CN)
(74) Representative: Pfenning, Meinig & Partner mbB
(86) International application number: PCT/CN2023/096625
(87) International publication number: WO 2024/021827

(57) **Abstract**

This application provides a data processing method and an apparatus, and relates to the field of artificial intelligence. The method may be applied to an artificial intelligence AI hardware accelerator. The method includes: obtaining a first index value; and searching a parameter dictionary for matrix blocks corresponding to the first index value, where the parameter dictionary includes P types of matrix blocks and index values respectively corresponding to the P types of matrix blocks, and each matrix block is a part of a parameter matrix of a convolutional neural network model. This method is used to improve performance of the AI hardware accelerator.

## Description

This application claims priority to Chinese Patent Application No. 202210895071.7, filed with the China National Intellectual Property Administration on July 28, 2022 and entitled "DATA PROCESSING METHOD AND APPARATUS", which is incorporated herein by reference in its entirety.

### TECHNICAL FIELD

This application relates to the field of artificial intelligence, and in particular, to a data processing method and an apparatus.

### BACKGROUND

In recent years, with good performance of a convolutional neural network in image classification, image recognition, audio recognition, and other related fields, the convolutional neural network becomes a research and development hotspot in the academia and industry. An artificial intelligence (artificial intelligence, AI) hardware accelerator (dedicated hardware integrated acceleration circuit) method is used to accelerate an operation of the convolutional neural network, so that running efficiency of an application related to the convolutional neural network can be improved, and execution time of the application related to the convolutional neural network can be shortened. This is a current research hotspot.

How to improve processing performance of an AI hardware accelerator is a problem that needs to be resolved currently.

### SUMMARY

This application provides a data processing method and an apparatus, to improve processing performance of an AI hardware accelerator.

According to a first aspect, a data processing method is provided. The method includes: obtaining a parameter matrix of a convolutional neural network model; partitioning the parameter matrix into a plurality of matrix blocks, where the plurality of matrix blocks include P types of matrix blocks with different content; generating an index value of each matrix block in the P types of matrix blocks, where the index value uniquely indicates a corresponding matrix block; and generating a parameter dictionary of the convolutional neural network model, where the parameter dictionary includes the P types of matrix blocks and the index values respectively corresponding to the P types of matrix blocks.

In this method, it is considered that for the parameter matrix of the convolutional neural network model, the parameter matrix may be considered as a large matrix constructed by small matrix blocks. These matrix blocks include matrix blocks with same content. Therefore, the matrix blocks with same content may be represented by using a same index value. In this way, one parameter matrix may be represented as several index values. An AI hardware accelerator only needs to read an index value corresponding to a parameter of a current operation from a memory each time, and then restore required parameter content inside the AI hardware accelerator based on the obtained index value, so that actual utilization efficiency of an I/O bandwidth can be greatly improved.

In a possible design, the obtaining a parameter matrix of a convolutional neural network model includes: obtaining an original parameter matrix of the convolutional neural network model; and retraining the original parameter matrix to obtain the parameter matrix of the convolutional neural network model that meets a constraint condition, where the constraint condition includes that the parameter matrix can be partitioned into a plurality of matrix blocks, and the plurality of matrix blocks include matrix blocks with same content.

In the foregoing design, it is considered that, on one hand, a convolutional neural network mainly consists of two phases: training and inference. Training means a process in which a parameter of each layer in the convolutional neural network is continuously adjusted by training sample data, so that an output result of the convolutional neural network model meets a requirement. Inference means a process in which an already trained convolutional neural network model is used in an actual scenario such as image classification, image recognition, or voice recognition, and to-be-processed data such as an image or audio is input into the convolutional neural network model to obtain a processing result. A purpose of training is to select the convolutional neural network model and the parameter matrix that can perform inference efficiently and accurately. Therefore, in theory, any model and parameter can meet the requirement provided that the model and parameter enable inference accuracy to reach an expected goal. In this way, there is specific operable space in the training process of the parameter matrix. On the other hand, as described above, if a parameter matrix of an existing convolutional neural network model in the conventional technology is directly partitioned into matrix blocks, a problem of poor compression effect may be caused because there are excessive types of matrix blocks. Therefore, in this implementation, a manner in which the parameter matrix of the convolutional neural network model is retrained may be used, and the constraint condition is added in the retraining process, so that the trained parameter matrix can meet a data compression format (that is, the parameter matrix can be partitioned into the plurality of matrix blocks, and the plurality of matrix blocks include the matrix blocks with same content), and inference accuracy can also be ensured.

In a possible design, the method further includes: determining a specification of the matrix block based on a specification of a hardware resource and difficulty of model training.

In the foregoing design, it is considered that when the specification of the matrix block is determined, on one hand, a larger specification of the matrix block indicates higher compression efficiency, but higher difficulty in training the convolutional neural network model; on the other hand, a smaller specification of the matrix block indicates lower difficulty in training the convolutional neural network model, but lower compression efficiency. Therefore, the specification of the matrix block may be determined based on the specification of the hardware resource and the difficulty of model training, to consider both hardware resource overheads and compression gains.

According to a second aspect, a data processing method is provided. The method is applied to an artificial intelligence AI hardware accelerator. The method includes: obtaining a first index value; and searching a parameter dictionary for matrix blocks corresponding to the first index value, where the parameter dictionary includes P types of matrix blocks and index values respectively corresponding to the P types of matrix blocks, and each matrix block is a part of a parameter matrix of a convolutional neural network model.

In this method, it is considered that for the parameter matrix of the convolutional neural network model, the parameter matrix may be considered as a large matrix constructed by small matrix blocks. These matrix blocks include matrix blocks with same content. Therefore, the matrix blocks with same content may be represented by using a same index value. In this way, one parameter matrix may be represented as several index values. The AI hardware accelerator only needs to read an index value corresponding to a parameter of a current operation from a memory each time, and then restore required parameter content inside the AI hardware accelerator based on the obtained index value, so that actual utilization efficiency of an I/O bandwidth can be greatly improved.

In a possible design, the method further includes: splicing the matrix blocks corresponding to the first index value, to obtain a first parameter set of the convolutional neural network model.

In the foregoing design, it is considered that specifications of matrix blocks are different, when the AI hardware accelerator runs, index values of a plurality of matrix blocks may be obtained at a time, and then a matrix block corresponding to each index value is searched for in the parameter dictionary, and the matrix blocks are spliced, to obtain the parameter required for this operation.

In a possible design, the method further includes: loading the parameter dictionary into an on-chip buffer of the AI hardware accelerator.

According to the foregoing design, after obtaining the first index value, a data processing apparatus may directly search the parameter dictionary buffered in the on-chip buffer of the AI hardware accelerator for the matrix blocks corresponding to the first index value.

In a possible design, the obtaining a first index value includes: reading the first index value in an off-chip memory of the AI hardware accelerator.

In a possible design, the method further includes: buffering, into a weight buffer weight buffer of the AI hardware accelerator, the first parameter set included in the matrix blocks corresponding to the first index value, so that the AI hardware accelerator performs an operation based on the first parameter set.

According to a third aspect, a data processing apparatus is provided. The apparatus includes: an obtaining unit, configured to obtain a parameter matrix of a convolutional neural network model; a partitioning unit, configured to partition the parameter matrix into a plurality of matrix blocks, where the plurality of matrix blocks include P types of matrix blocks with different content; an index generation unit, configured to generate an index value of each matrix block in the P types of matrix blocks, where the index value uniquely indicates a corresponding matrix block; and a dictionary generation unit, configured to generate a parameter dictionary of the convolutional neural network model, where the parameter dictionary includes the P types of matrix blocks and the index values respectively corresponding to the P types of matrix blocks.

In a possible design, that an obtaining unit is configured to obtain a parameter matrix of a convolutional neural network model includes: The obtaining unit is configured to obtain an original parameter matrix of the convolutional neural network model; and the obtaining unit is configured to retrain the original parameter matrix to obtain the parameter matrix of the convolutional neural network model that meets a constraint condition, where the constraint condition includes that the parameter matrix can be partitioned into a plurality of matrix blocks, and the plurality of matrix blocks include matrix blocks with same content.

In a possible design, the partitioning unit is further configured to determine a specification of the matrix block based on a specification of a hardware resource and difficulty of model training.

According to a fourth aspect, a data processing apparatus is provided. The data processing apparatus is used in an artificial intelligence AI hardware accelerator. The data processing apparatus includes: an obtaining unit, configured to obtain a first index value; and a searching unit, configured to search a parameter dictionary for matrix blocks corresponding to the first index value, where the parameter dictionary includes P types of matrix blocks and index values respectively corresponding to the P types of matrix blocks, and each matrix block is a part of a parameter matrix of a convolutional neural network model.

In a possible design, the searching unit is further configured to splice the matrix blocks corresponding to the first index value, to obtain a first parameter set of the convolutional neural network model.

In a possible design, the obtaining unit is further configured to load the parameter dictionary into an on-chip buffer of the AI hardware accelerator.

In a possible design, that an obtaining unit is configured to obtain a first index value includes: The obtaining unit is configured to read the first index value in an off-chip memory of the AI hardware accelerator.

In a possible design, the data processing apparatus further includes: a writing unit, configured to buffer, into a weight buffer weight buffer of the AI hardware accelerator, the first parameter set included in the matrix blocks corresponding to the first index value, so that the AI hardware accelerator performs an operation based on the first parameter set.

According to a fifth aspect, a communication apparatus is provided. The communication apparatus includes a processor and an interface. The processor receives or sends data through the interface, and the processor is configured to implement the method according to any one of the first aspect or the designs of the first aspect or the second aspect or the designs of the second aspect.

According to a sixth aspect, a computer-readable storage medium is provided. The computer-readable storage medium stores instructions; and when the instructions are run on a processor, the method according to any one of the first aspect or the designs of the first aspect or the second aspect or the designs of the second aspect is implemented.

A computer program product is provided. The computer program product includes instructions; and when the instructions are run on a processor, the method according to any one of the first aspect or the designs of the first aspect or the second aspect or the designs of the second aspect is implemented.

### BRIEF DESCRIPTION OF DRAWINGS

FIG. 1 is a diagram 1 of a structure of an AI hardware accelerator according to this application;
FIG. 2 is a schematic flowchart of running of an AI hardware accelerator after a parameter of a convolutional neural network model is compressed according to this application;
FIG. 3 is a diagram of parameter compression according to this application;
FIG. 4 is a schematic flowchart 1 of a data processing method according to this application;
FIG. 5 is a diagram of a structure of an SOC according to this application;
FIG. 6 is a diagram 2 of a structure of an AI hardware accelerator according to this application;
FIG. 7 is a schematic flowchart 2 of a data processing method according to this application;
FIG. 8 is a diagram 1 of a structure of a data processing apparatus according to this application;
FIG. 9 is a diagram 2 of a structure of a data processing apparatus according to this application; and
FIG. 10 is a diagram 3 of a structure of a data processing apparatus according to this application.

### DESCRIPTION OF EMBODIMENTS

The following describes technical solutions in embodiments with reference to the accompanying drawings in embodiments. To clearly describe the technical solutions in embodiments, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments, words such as "example" or "for example" are used to give an example, an illustration, or a description. Any embodiment or design scheme described as an "example" or "for example" in embodiments should not be explained as being more preferred or having more advantages than another embodiment or design scheme. To be precise, use of the terms such as "example" or "for example" is intended to present a related concept in a specific manner for ease of understanding.

To facilitate understanding of the technical solutions provided in embodiments, related technologies in embodiments are first described.

A convolutional neural network is an AI computing method commonly used in image classification, image recognition, audio recognition, and other related fields. Usually, the convolutional neural network may be used to recognize a feature in input information (for example, an image).

The convolutional neural network usually includes operations of four layers, and the four layers respectively include a convolutional (Convolutional, Conv) layer; an activation function, namely, a rectified linear unit (Rectified Linear Unit, Relu) layer; a pooling (Pooling) layer; and a fully connected (Fully Connected, FC) layer.

A convolutional neural network model usually includes a plurality of convolutional layers, activation function layers, and pooling layers that appear alternately for a plurality of times, and finally data is input into the fully connected layer to obtain an output result. For example, an input image->Conv->Relu->Conv->Relu->Pooling->Conv->Relu->Conv->Relu->Pooling->Conv->Relu->Conv->Relu->Pooling->FC->an output.

A function of the convolutional layer is to perform feature recognition on input image data through a plurality of filters. Each filter has a scanning range, and is used to scan data information in a specific area of the input image. A computing result obtained by the current convolutional layer is input into a next layer (where the next layer may be the activation function, the pooling layer, or the fully connected layer) for processing.

The activation function layer performs an operation similar to MAX(0, x) on the input image data. That is, each value in the input image data is compared with 0. If the value is greater than 0, the value is reserved. If the value is less than 0, the value is set to 0. The activation function layer provides a sparsity ratio of the input image data (namely, a percentage of a quantity of 0s to a total quantity of pieces of data in the data), and does not change a size of the input image data (namely, a data volume).

A function of the pooling layer is downsampling. To be specific, the pooling layer extracts data from a two-dimensional matrix of each layer of the input data at an interval of rows or columns, to reduce the size of the input image data.

An operation process of the fully connected layer is similar to that of the convolutional layer. A difference lies in that a filter of the fully connected layer does not scan a specific small area of the input image data, but scans the entire input image data at a time, and then outputs a value. There are a plurality of filters in the fully connected layer, and the plurality of filters correspond to a plurality of different quite specific image features. An output value is equivalent to a "score", and is for indicating a "possibility" that the input image data includes these features.

A core of the AI hardware accelerator is the convolutional layer and the fully connected layer. In most convolutional neural networks, a ratio of a computing amount of the convolutional layer and the fully connected layer to a computing amount of the entire convolutional neural network may reach more than 90%. Therefore, operation performance of the convolutional layer and the fully connected layer usually determines overall performance of the AI hardware accelerator.

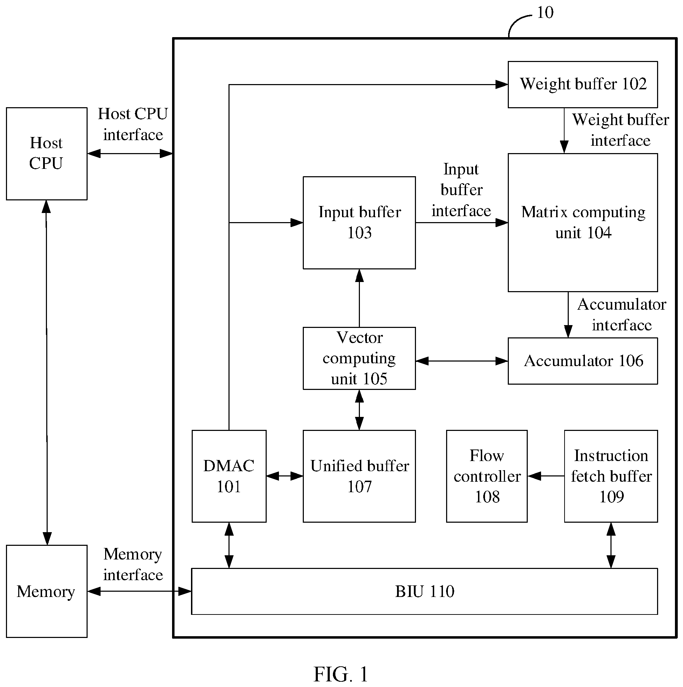

FIG. 1 is a diagram of a structure of an AI accelerator according to an embodiment.

The AI accelerator 10 includes a bus interface unit (Bus Interface Unit, BIU) 110, a direct memory access controller (Direct Memory Access Controller, DMAC) 101, a weight buffer (weight buffer) 102 (which may also be referred to as a parameter buffer), an input buffer (input buffer) 103, a matrix computing unit (cube unit) 104, a vector computing unit (vector unit) 105, an accumulator (accumulator) 106, a unified buffer (unified buffer) 107, a flow controller (flow controller) 108, and an instruction fetch buffer (instruction fetch buffer) 109. The weight buffer 102, the input buffer 103, the unified buffer 107, and the instruction fetch buffer 109 are on-chip buffers (on-chip buffers) in the AI accelerator 10.

The AI accelerator 10 is mounted to a host CPU (host CPU) 20 as a coprocessor, and the host CPU allocates a task. Specifically, the DMAC 101 in the AI accelerator 10 directly accesses a memory through the BIU 110, obtains feature data and a parameter of a convolutional neural network, buffers the feature data into the input buffer 103, and buffers the parameter into the weight buffer 102. The memory may be an external storage unit private to an AI accelerator hardware architecture. For example, the memory may be a double data rate (Double Data Rate, DDR) memory.

It should be noted that the "parameter" in this embodiment is specifically a parameter obtained by training a convolutional neural network model. In other words, the parameter may represent a trained convolutional neural network model. In addition, because the parameter of the convolutional neural network model is usually stored and computed in a form of a matrix, a matrix constructed by the parameter in the following is referred to as a "parameter matrix" for ease of description. In addition, in this embodiment, data that needs to be inferred by using the convolutional neural network model to obtain an inference result is referred to as "feature data". A matrix formed by the feature data is referred to as a "feature data matrix".

For example, in a scenario in which image recognition is performed by using the convolutional neural network model, parameters may be understood as parameters configured at all layers in the convolutional neural network model used to recognize images, and these parameters form a "parameter matrix". Data that is of a to-be-recognized image and that is input into the convolutional neural network model is feature data, and the feature data forms a "feature data matrix". In the following, unless otherwise specified, for understanding of the parameter, the parameter matrix, the feature data, and the feature data matrix, refer to the foregoing descriptions.

In addition, in the AI accelerator 10, the matrix computing unit 104 is a core component of the AI accelerator, and is configured to complete matrix-matrix multiplication computing corresponding to an operation of the convolutional layer and an operation of the fully connected layer. When the operation of the convolutional layer or the operation of the fully connected layer is performed, the matrix computing unit 104 reads data of the feature data matrix from the input buffer 103, reads data of the parameter matrix from the weight buffer 102, performs matrix multiplication computing on the matrix computing unit 104, to obtain a partial operation result or a final operation result, and stores the obtained operation result in the accumulator 106.

The vector computing unit 105 is configured to perform further processing, for example, processing such as vector multiplication, vector addition, an exponential operation, a logarithmic operation, and size comparison, on an output of the matrix computing unit 104 if necessary. The vector computing unit 105 is mainly configured to perform network computing other than that at the convolutional layer and the fully connected layer in the convolutional neural network (where for example, the vector computing unit 105 may be configured to perform an operation of the activation function layer and an operation of the pooling layer).

In addition, the unified buffer 107 is configured to store an output computing result and input data of some layers (for example, the activation function layer and the pooling layer). The BIU 110 is configured to interact with the memory, the DMAC 101, and the instruction fetch buffer 109 through a bus. The DMAC 101 is configured to transfer data in the memory to the weight buffer 102, the input buffer 103, or the unified buffer 107, or transfer data in the unified buffer 107 to the memory. The instruction fetch buffer 109 is configured to buffer instructions, and control a working process of the AI hardware accelerator 10 by using the instructions. The flow controller 108 is configured to manage an execution process of the instructions.

In a running process of the AI hardware accelerator, specifically, when an operation of the convolutional layer and an operation of the fully connected layer are implemented, because a quantity of related parameters is large, the parameters cannot be all stored in the weight buffer 102 in the AI hardware accelerator. Therefore, in an inference process, parameters related in current computing usually need to be imported in real time to complete computing. The parameters imported in real time occupy an input/output (input/output, I/O) bandwidth of the AI hardware accelerator 10. Therefore, if the I/O bandwidth becomes a bottleneck, a computing unit capability of the AI hardware accelerator 10 is vacant, thereby reducing overall performance of the AI hardware accelerator 10.

Therefore, compressing the parameters of the convolutional neural network model becomes one of means to avoid the I/O bandwidth from becoming a bottleneck and improve overall performance of the AI hardware accelerator 10.

Specifically, data compression is a technology that a volume of the data is reduced by changing an expression format and an organization structure of the data based on redundancy of the data. A volume of the parameter of the convolutional neural network is reduced by compressing the parameter, and an original parameter is restored by performing real-time decompression in the AI hardware accelerator, so that more external parameters can be provided in a same bandwidth, thereby improving actual utilization efficiency of the I/O bandwidth.

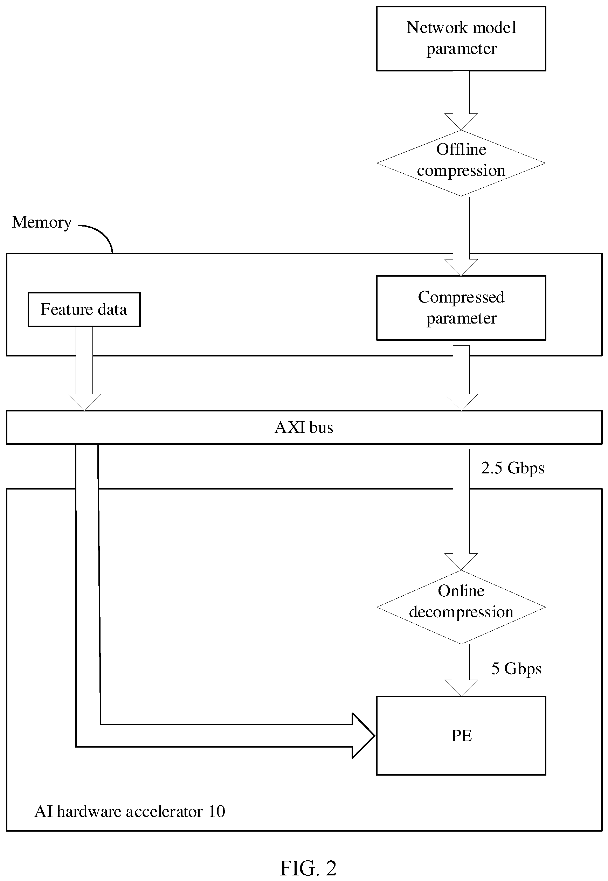

For example, as shown in FIG. 2, for the parameter of the convolutional neural network model, offline compression is first performed on the parameter by using a compression algorithm to obtain a compressed parameter, and then the compressed parameter is stored in an off-chip memory. In addition, the feature data is also stored in the off-chip memory. The memory is connected to the AI hardware accelerator 10 through an advanced extensible interface (advanced extensible interface, AXI) bus. When the AI hardware accelerator runs, a part of compressed data is obtained from the compressed parameter based on an address addr of the required parameter. If a length of the compressed data is len, the part of compressed data is read in the AI hardware accelerator by using an I/O read request <addr,len>, and then the compressed data is restored to the original parameter through real-time online decompression in the AI hardware accelerator. If a volume of the compressed data is compressed by 2 times relative to a volume of the original parameter, a same function can be implemented by using 1/2 of an original bandwidth compared with directly reading the original parameter from the memory, thereby saving precious bandwidth resources of the AI hardware accelerator.

For example, in FIG. 2, if a rate at which the AI hardware accelerator 10 reads the compressed data from the memory is 2.5 Gbps, through online decompression in the AI hardware accelerator, a rate of the original parameter actually obtained by a processing element (processing element, PE) in the AI hardware accelerator 10 may reach 5 Gbps. In this way, actual utilization efficiency of the I/O bandwidth can be improved.

It should be noted that, in this embodiment, an operation performed inside the AI hardware accelerator in the running process of the AI hardware accelerator is an "online" operation, and an operation performed outside the AI hardware accelerator is an "offline" operation. For example, the foregoing "offline compression" may be understood as compressing, outside the AI hardware accelerator, the parameter of the convolutional neural network model by using computing power of another device, to obtain the compressed parameter. For another example, the foregoing "online decompression" may be understood as decompressing the compressed parameter in the AI hardware accelerator by using computing power in the AI hardware accelerator.

In the foregoing process, a decompression module responsible for online decompression is the most important part. Performance and an area of the decompression module need to meet a corresponding specification of a chip. Currently, a bandwidth that a decompression module of a common compression algorithm can reach is low. For example, a decoding rate that can be reached by a single Huffman coding decompression engine is about 1 bit/cycle to 2 bits/cycle. Obviously, a decompression speed is too small for a bandwidth (about 32 B/cycle, that is, 256 bits/cycle) in an actual application scenario. Even a single engine that is specially optimized for a decompression bandwidth can only reach about 32 bits/cycle. Therefore, how to complete high-bandwidth implementation decompression is a problem that needs to be resolved currently.

To resolve the foregoing technical problem, in a conventional technology, a compression rate of the parameter may be increased in a model training phase by increasing a parameter sparsity ratio as much as possible. The sparsity ratio is a ratio of a value 0 in the parameter to the parameter.

However, in the foregoing conventional technology, on one hand, an excessively high parameter sparsity ratio affects computing precision of the convolutional neural network; on the other hand, a compression rate of a parameter with a low sparsity ratio is difficult to be improved, and a benefit of reducing an I/O bandwidth requirement is not obvious.

For the foregoing case, embodiments provide a data processing method. In this method, it is considered that for a parameter matrix of a convolutional neural network model, the parameter matrix may be considered as a large matrix constructed by small matrix blocks. These matrix blocks include matrix blocks with same content. Therefore, the matrix blocks with same content may be represented by using a same index value. In this way, one parameter matrix may be represented as several index values. An AI hardware accelerator only needs to read an index value corresponding to a parameter of a current operation from a memory each time, and then restore required parameter content inside the AI hardware accelerator based on the obtained index value, so that actual utilization efficiency of an I/O bandwidth can be greatly improved.

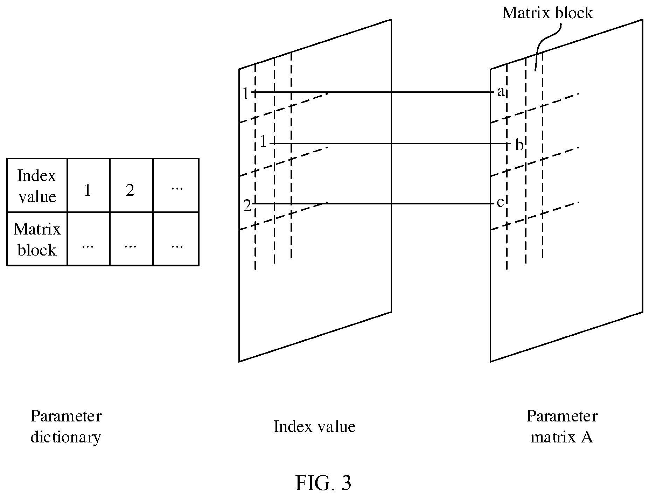

Specifically, as shown in FIG. 3, for a parameter matrix A of the convolutional neural network model, the parameter matrix A may be partitioned into a plurality of matrix blocks. A matrix block a, a matrix block b, and a matrix block c are used as an example. Content of the matrix block a is the same as that of the matrix block b. Therefore, a same index value may be used for representing the matrix block a and the matrix block b. As shown in FIG. 3, an index value 1 is for representing the content of the matrix block a and the content of the matrix block b, and an index value 2 is for representing content of the matrix block c. In addition, in embodiments, a parameter dictionary is further constructed to record a correspondence between each index value and content of a matrix block.

In this way, in a running process of the AI hardware accelerator, when the AI hardware accelerator needs to obtain a parameter in the matrix block a in the parameter matrix A, the AI hardware accelerator only needs to read the index value 1 corresponding to the matrix block a from the memory, and then determines matrix content of the index value 1 by querying the parameter dictionary, that is, may obtain the parameter in the matrix block a, to complete an operation.

With reference to an example, the following describes a specific implementation process of the method when the data processing method provided in embodiments is applied to a scenario in which a parameter matrix of a convolutional neural network model is compressed. Specifically, when the method is applied to the scenario in which the parameter matrix of the convolutional neural network model is compressed, the method may be implemented by a data processing apparatus.

In an implementation, the data processing apparatus may include a device that can perform data processing, for example, a desktop computer, a tablet computer, a desktop, a laptop computer, a handheld computer, a notebook computer, an ultra-mobile personal computer (ultra-mobile personal computer, UMPC), a netbook, a cellular phone, a personal digital assistant (personal digital assistant, PDA), or an augmented reality (augmented reality, AR)/virtual reality (virtual reality, VR) device. In another implementation, the data processing apparatus may alternatively be an AI hardware accelerator. A specific form of the data processing apparatus is not specially limited in embodiments of the present disclosure.

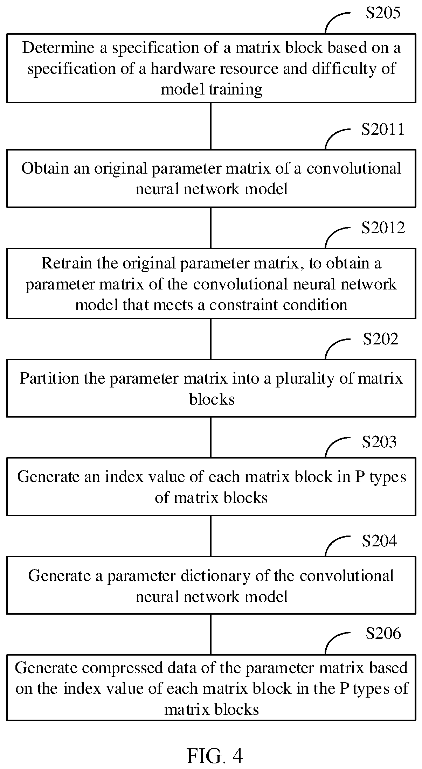

As shown in FIG. 4, the method may include the following steps.

S201: A data processing apparatus obtains a parameter matrix of a convolutional neural network model.

In this embodiment, a specific type of the convolutional neural network model may not be limited. For example, the convolutional neural network model in this embodiment may be specifically a convolutional neural network model used in a field such as image classification, image recognition, or voice recognition.

As described above, a "parameter" in this embodiment is specifically a parameter obtained by training the convolutional neural network model. In other words, the parameter may represent a trained convolutional neural network model. In addition, because the parameter of the convolutional neural network model is usually stored and computed in a form of a matrix, a matrix constructed by the parameter is referred to as a "parameter matrix" for ease of description.

In an implementation, it is considered that if a parameter matrix of an existing convolutional neural network model in the conventional technology is directly partitioned into matrix blocks, a problem of poor compression effect may be caused because there are excessive types of matrix blocks. Therefore, S201 may specifically include the following steps.

S2011: The data processing apparatus obtains an original parameter matrix of the convolutional neural network model.

The original parameter matrix may be understood as a parameter matrix that is not processed according to S2012 in the following of this embodiment. In other words, the original parameter matrix may be a parameter matrix obtained after the convolutional neural network model is trained according to the model training method in the conventional technology.

S2012: The data processing apparatus retrains the original parameter matrix, to obtain the parameter matrix of the convolutional neural network model that meets a constraint condition.

The constraint condition specifically includes that the parameter matrix can be partitioned into a plurality of matrix blocks, and the plurality of matrix blocks include matrix blocks with same content. In other words, the constraint condition may also be understood as that the parameter matrix can be formed by several same matrix blocks.

In the foregoing implementation, it is considered that, on one hand, a convolutional neural network mainly consists of two phases: training and inference. Training means a process in which a parameter of each layer in the convolutional neural network is continuously adjusted by training sample data, so that an output result of the convolutional neural network model meets a requirement. Inference means a process in which an already trained convolutional neural network model is used in an actual scenario such as image classification, image recognition, or voice recognition, and to-be-processed data such as an image or audio is input into the convolutional neural network model to obtain a processing result. A purpose of training is to select the convolutional neural network model and the parameter matrix that can perform inference efficiently and accurately. Therefore, in theory, any model and parameter can meet the requirement provided that the model and parameter enable inference accuracy to reach an expected goal. In this way, there is specific operable space in the training process of the parameter matrix. On the other hand, as described above, if a parameter matrix of an existing convolutional neural network model in the conventional technology is directly partitioned into matrix blocks, a problem of poor compression effect may be caused because there are excessive types of matrix blocks. Therefore, in this implementation, a manner in which the parameter matrix of the convolutional neural network model is retrained may be used, and the constraint condition is added in the retraining process, so that the trained parameter matrix can meet a data compression format (that is, the parameter matrix can be partitioned into the plurality of matrix blocks, and the plurality of matrix blocks include the matrix blocks with same content), and inference accuracy can also be ensured.

S202: The data processing apparatus partitions the parameter matrix into the plurality of matrix blocks.

The plurality of matrix blocks include P types of matrix blocks with different content.

For example, the parameter matrix is a 1000×1000 matrix. If the parameter matrix is partitioned based on a specification of 10×10, the parameter matrix may be partitioned into 10000 matrix blocks (that is, the parameter matrix is partitioned into the plurality of matrix blocks). In addition, if content of 7000 matrix blocks in the 10000 matrix blocks is the same as that of other matrix blocks, that is, the 10000 matrix blocks include 3000 types of matrix blocks with different content (that is, P is 3000). That is, the 3000 types of matrix blocks may be for representing the entire parameter matrix.

S203: The data processing apparatus generates an index value of each matrix block in the P types of matrix blocks.

The index value uniquely indicates a corresponding matrix block.

The foregoing example is continued. If the 10000 matrix blocks included in the parameter matrix include the 3000 types of matrix blocks with different content, 0 to 2999 may be used as the 3000 types of matrix blocks.

S204: The data processing apparatus generates a parameter dictionary of the convolutional neural network model.

The parameter dictionary includes the P types of matrix blocks and the index values respectively corresponding to the P types of matrix blocks.

In an implementation, it is considered that when the specification of the matrix block is determined, on one hand, a larger specification of the matrix block indicates higher compression efficiency, but higher difficulty in training the convolutional neural network model; on the other hand, a smaller specification of the matrix block indicates lower difficulty in training the convolutional neural network model, but lower compression efficiency. Therefore, the method may further include the following step.

S205: The data processing apparatus determines a specification of the matrix block based on a specification of a hardware resource and difficulty of model training.

The specification of the hardware resource may specifically include various specifications that are of a hardware resource of a device and that are used for training the convolutional neural network model. A smaller specification configuration of the hardware resource indicates a smaller specification of the matrix block. On the other hand, higher difficulty of model training indicates a smaller specification of the matrix block.

In addition, after the parameter dictionary is generated, the method may further include the following step.

S206: The data processing apparatus generates compressed data of the parameter matrix based on the index value of each matrix block in the P types of matrix blocks.

For example, each matrix block in the parameter matrix is replaced with the corresponding index value, to obtain the compressed data of the parameter matrix.

For example, assuming that a size of each matrix block is 128 B, and the index value corresponding to each matrix block is 1 B, a 128 B parameter that originally needs to be loaded needs only 1 B now, and a compression rate is up to 128 times.

With reference to an example, the following describes a specific implementation process of the method when the data processing method provided in this embodiment is applied to a scenario of an inference process of the convolutional neural network model. Specifically, when the method is applied to the scenario of the inference process of the convolutional neural network model, the method may be implemented by a data processing apparatus.

Specifically, a function of the data processing apparatus may be implemented by some/all hardware in the AI hardware accelerator.

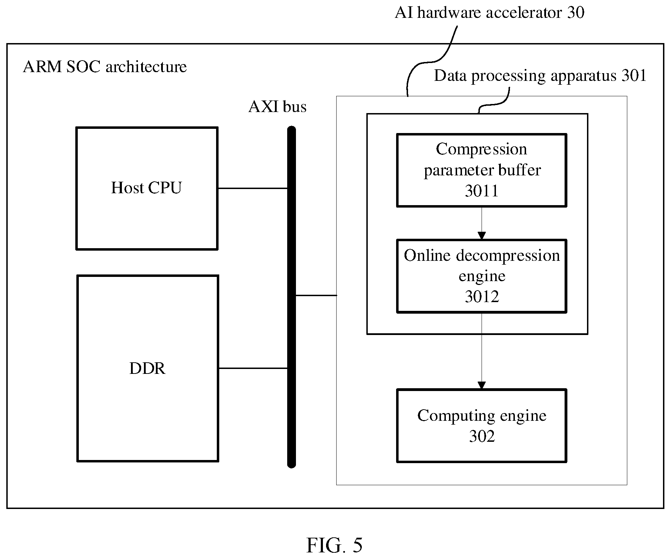

In an implementation, as shown in FIG. 5, the AI hardware accelerator 30 may include a data processing apparatus 301 and a computing engine 302. The data processing apparatus 301 is configured to implement a process of performing online decompression on a parameter in the method provided in this embodiment. Specifically, the data processing apparatus 301 may include a compression parameter buffer 3011 configured to buffer a compressed parameter and an online decompression engine 3012 configured to decompress the parameter online.

In addition, the computing engine 302 is configured to perform an inference operation based on the parameter of the convolutional neural network model. In addition, an ARM SOC architecture is used as an example. The AI hardware accelerator 30 is further connected, through an AXI bus, to a host CPU and a DDR that is used as a memory.

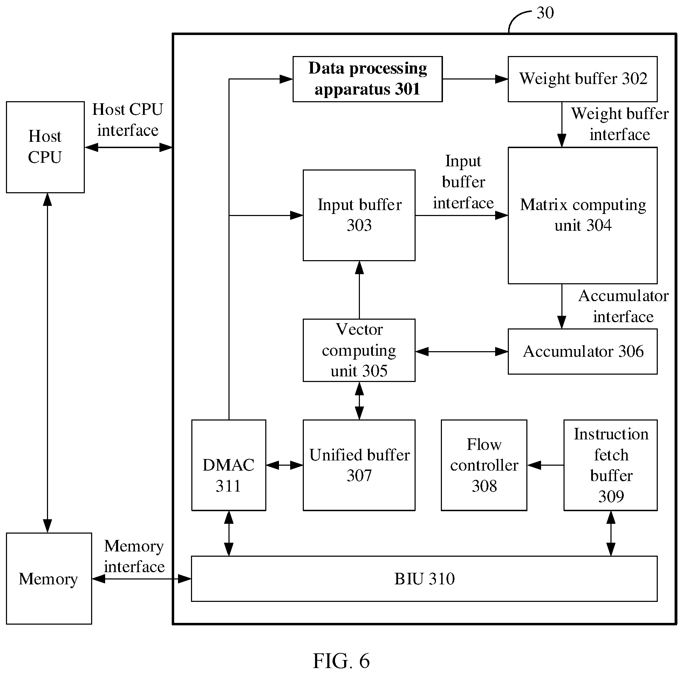

Specifically, when the AI hardware accelerator 30 is combined with the AI hardware accelerator 10 shown in FIG. 1, the computing engine 302 is understood as a functional module including modules such as the weight buffer 102 and the matrix computing unit 104. Further, as shown in FIG. 6, a structure of the AI hardware accelerator 30 may further include a bus interface unit (Bus Interface Unit, BIU) 310, a direct memory access controller (Direct Memory Access Controller, DMAC) 311, a weight buffer (weight buffer) 302 (which may also be referred to as a parameter buffer), an input buffer (input buffer) 303, a matrix computing unit (cube unit) 304, a vector computing unit (vector unit) 305, an accumulator (accumulator) 306, a unified buffer (unified buffer) 307, a flow controller (flow controller) 308, and an instruction fetch buffer (instruction fetch buffer) 309. For descriptions of functional modules other than the data processing apparatus 301 in the AI hardware accelerator 30 in FIG. 6, refer to descriptions of corresponding functional modules in FIG. 1. Details are not described herein.

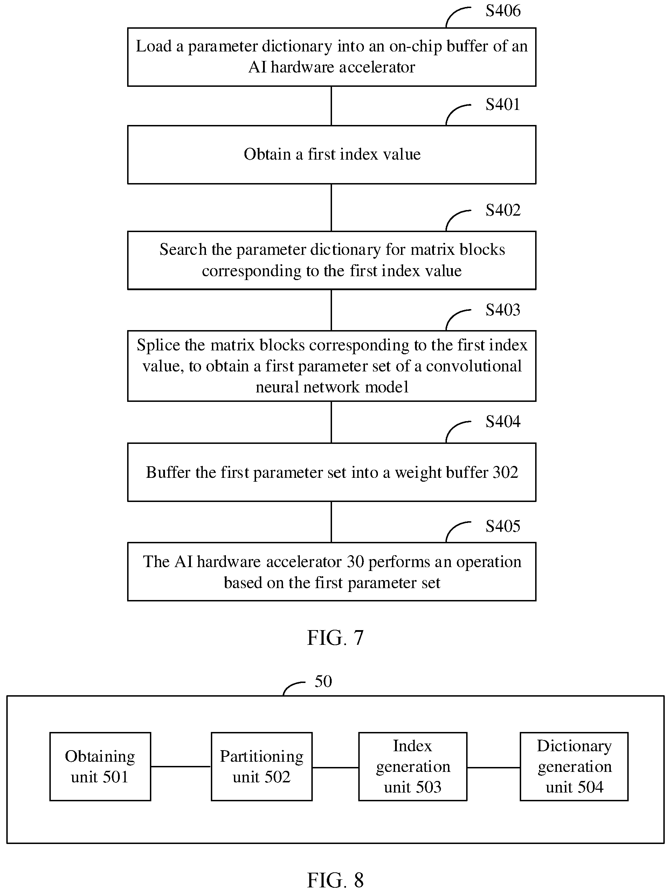

The following describes the method provided in this embodiment with reference to a running process of the data processing apparatus 301. Specifically, as shown in FIG. 7, the method includes the following steps.

S401: The data processing apparatus 301 obtains a first index value.

The first index value corresponds to some parameters in the parameter matrix of the convolutional neural network model.

Specifically, S401 may include: The data processing apparatus 301 reads the first index value in an off-chip memory of the AI hardware accelerator 30.

For example, when the AI hardware accelerator 30 runs, after the currently required parameter is determined, the data processing apparatus 301 accesses a corresponding address in the memory through the BIU, to obtain the first index value.

S402: The data processing apparatus 301 searches a parameter dictionary for matrix blocks corresponding to the first index value.

As described in 204 above, the parameter dictionary in this embodiment includes P types of matrix blocks and index values respectively corresponding to the P types of matrix blocks. The P types of matrix blocks are respectively a part of the parameter matrix of the convolutional neural network model.

For example, in the data processing apparatus 301, after obtaining the first index value, the first index value is first stored in the compression parameter buffer 3011. Then, the online decompression engine 3012 reads the first index value in the compression parameter buffer 3011, searches the parameter dictionary for the matrix blocks corresponding to the first index value, and completes online decompression of the parameter.

In an implementation, it is considered that specifications of matrix blocks are different, when the AI hardware accelerator runs, index values of a plurality of matrix blocks may be obtained at a time, and then a matrix block corresponding to each index value is searched for in the parameter dictionary, and the matrix blocks are spliced, to obtain the parameter required for this operation. Therefore, the method further includes the following steps.

S403: The data processing apparatus 301 splices the matrix blocks corresponding to the first index value, to obtain a first parameter set of the convolutional neural network model.

Specifically, the first index value may include a plurality of index values. Therefore, after determining matrix blocks corresponding to the index values in the first index value, the data processing apparatus 301 may obtain a parameter set (namely, the first parameter set) of the convolutional neural network model by splicing the matrix blocks corresponding to the first index value.

For example, in the data processing apparatus 301, the online decompression engine 3012 splices the matrix blocks corresponding to the first index value, to obtain the first parameter set of the convolutional neural network model.

S404: The data processing apparatus 301 buffers the first parameter set into the weight buffer 302 of the AI hardware accelerator 30.

For example, after determining the first parameter set in the data processing apparatus 301, the online decompression engine 3012 buffers the first parameter set into the weight buffer 302.

S405: The AI hardware accelerator 30 performs an operation based on the first parameter set.

For a process in which the AI hardware accelerator 30 performs the operation based on the first parameter set, refer to the conventional technology. Details are not described herein again.

In an implementation, to reduce occupation of an I/O bandwidth in the inference process performed by the AI hardware accelerator, the method may further include the following step.

S406: The data processing apparatus 301 loads the parameter dictionary into an on-chip buffer of the AI hardware accelerator.

For example, the data processing apparatus 301 may pre-load the parameter dictionary into the buffer inside the data processing apparatus 301, for example, the compression parameter buffer 3011 in FIG. 5. For another example, the data processing apparatus 301 may further load the parameter dictionary into another on-chip buffer of the AI hardware accelerator, for example, load the parameter dictionary into the weight buffer 302.

In this way, after obtaining the first index value, the data processing apparatus 301 may directly search the parameter dictionary buffered in the on-chip buffer of the AI hardware accelerator for the matrix blocks corresponding to the first index value.

It should be noted that, in an actual application process, the data processing apparatus 301 may also pre-load some parameter dictionaries into the on-chip buffer, so that occupation of the I/O bandwidth can be further reduced. This may not be limited in this embodiment.

In the foregoing method provided in this embodiment, in this method, it is considered that for the parameter matrix of the convolutional neural network model, the parameter matrix may be considered as a large matrix constructed by small matrix blocks. These matrix blocks include matrix blocks with same content. Therefore, the matrix blocks with same content may be represented by using a same index value. In this way, one parameter matrix may be represented as several index values. The AI hardware accelerator only needs to read an index value corresponding to a parameter of a current operation from a memory each time, and then restore required parameter content inside the AI hardware accelerator based on the obtained index value, so that actual utilization efficiency of an I/O bandwidth can be greatly improved.

For example, Visual Geometry Group 16 (VGG16) proposed by the Visual Geometry Group, Oxford University and a Transformer model proposed by Google in 2017 are used as an example. Table 1 lists data volumes of parameters in two models in an experiment when the technical solution in the conventional technology and the technical solution provided in this embodiment are used.

**Table 1**

| Component | VGG16 | | Transformer | |
|---|---|---|---|---|
| | Conventional technology | Technical solution provided in this embodiment | Conventional technology | Technical solution provided in this embodiment |
| Variable | 528 MB | 14.45 MB (index value: 13.29 M and parameter dictionary: 1.16 M) | 471 MB | 11.46 MB (index value: 11.34 M and parameter dictionary: 0.12 M) |
| avg_grad | 528 MB | 1.16 MB | 471 MB | 0.12 MB |
| m | 528 MB | 1.16 MB | 471 MB | 0.12 MB |
| v | 528 MB | 1.16 MB | 471 MB | 0.12 MB |
| *m̂* | 528 MB | 1.16 MB | 471 MB | 0.12 MB |
| v̂ | 528 MB | 1.16 MB | 471 MB | 0.12 MB |
| Total | 3.17 GB | 20.25 MB | 2.76 GB | 12.06 MB |

Variable, avg_grad, m, v, *m̂* , and v̂ are parameters of different layers in the convolutional neural network model. It can be learned that, in this experiment, the technical solution provided in this embodiment can achieve a compression rate of 150 to 220 times. Therefore, utilization efficiency of the I/O bandwidth can be greatly improved, and overall performance of the AI hardware accelerator 10 can be improved.

It may be understood that various numeric numbers in the foregoing data processing method in this embodiment are merely for distinguishing for ease of description, and are not intended to limit the scope of this embodiment. For example, in the data processing method described in FIG. 4, S205 may be performed at any time before the matrix blocks are partitioned in S202. For another example, in the data processing method described in FIG. 7, S406 may be performed at any time before the matrix block is searched for in S402. The sequence numbers of the foregoing processes do not mean execution sequences, and the execution sequences of the processes should be determined based on functions and internal logic of the processes.

With reference to FIG. 3 to FIG. 7, the foregoing describes in detail the data processing method provided in embodiments. The following describes various apparatuses and devices corresponding to the data processing method provided in embodiments.

FIG. 8 is a diagram of a structure of a data processing apparatus according to an embodiment. The data processing apparatus 50 may be software and hardware apparatuses configured to perform training of a convolutional neural network model. Specifically, the data processing apparatus 50 may include a device that can perform data processing, for example, a desktop computer, a tablet computer, a desktop, a laptop computer, a handheld computer, a notebook computer, an ultra-mobile personal computer (ultra-mobile personal computer, UMPC), a netbook, a cellular phone, a personal digital assistant (personal digital assistant, PDA), or an augmented reality (augmented reality, AR)/virtual reality (virtual reality, VR) device. Alternatively, the data processing apparatus 50 may be an AI hardware accelerator. The data processing apparatus 50 may be configured to perform all or some of the steps performed by the data processing apparatus in FIG. 4. Specifically, the data processing apparatus 50 includes:
an obtaining unit 501, configured to obtain a parameter matrix of a convolutional neural network model;
a partitioning unit 502, configured to partition the parameter matrix into a plurality of matrix blocks, where the plurality of matrix blocks include P types of matrix blocks with different content;
an index generation unit 503, configured to generate an index value of each matrix block in the P types of matrix blocks, where the index value uniquely indicates a corresponding matrix block; and
a dictionary generation unit 504, configured to generate a parameter dictionary of the convolutional neural network model, where the parameter dictionary includes the P types of matrix blocks and the index values respectively corresponding to the P types of matrix blocks.

Optionally, that an obtaining unit 501 is configured to obtain a parameter matrix of a convolutional neural network model includes:

The obtaining unit 501 is configured to obtain an original parameter matrix of the convolutional neural network model; and
the obtaining unit 501 is configured to retrain the original parameter matrix to obtain the parameter matrix of the convolutional neural network model that meets a constraint condition, where the constraint condition includes that the parameter matrix can be partitioned into a plurality of matrix blocks, and the plurality of matrix blocks include matrix blocks with same content.

Optionally, the partitioning unit 502 is further configured to determine a specification of the matrix block based on a specification of a hardware resource and difficulty of model training.

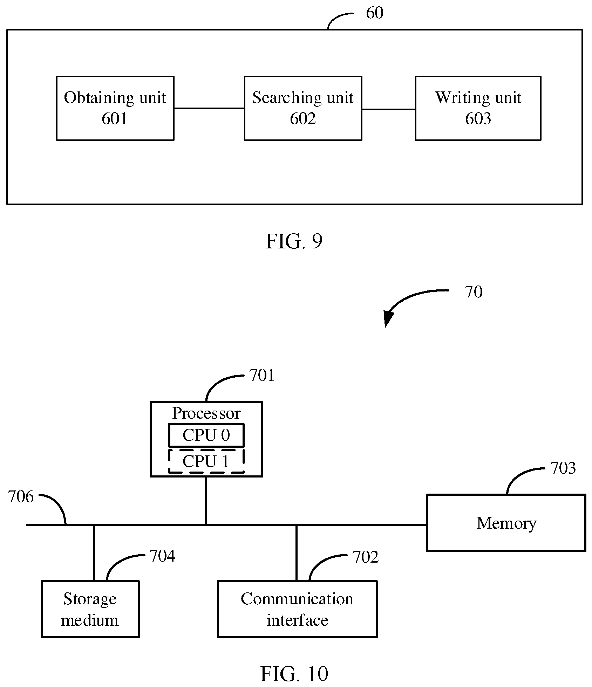

FIG. 9 is a diagram of a structure of another data processing apparatus according to an embodiment. The data processing apparatus 60 may be software and hardware apparatuses configured to perform inference of a convolutional neural network model. Specifically, the data processing apparatus 60 may alternatively be all or some software/hardware apparatuses in an AI hardware accelerator. The data processing apparatus 60 may be configured to perform all or some of the steps performed by the data processing apparatus in FIG. 7.

Specifically, the data processing apparatus 60 includes:
an obtaining unit 601, configured to obtain a first index value; and
a searching unit 602, configured to search a parameter dictionary for matrix blocks corresponding to the first index value, where the parameter dictionary includes P types of matrix blocks and index values respectively corresponding to the P types of matrix blocks, and each matrix block is a part of a parameter matrix of a convolutional neural network model.

Optionally, the searching unit 602 is further configured to splice the matrix blocks corresponding to the first index value, to obtain a first parameter set of the convolutional neural network model.

Optionally, the obtaining unit 601 is further configured to load the parameter dictionary into an on-chip buffer of the AI hardware accelerator.

Optionally, that an obtaining unit 601 is configured to obtain a first index value includes: The obtaining unit 601 is configured to read the first index value in an off-chip memory of the AI hardware accelerator.

Optionally, the data processing apparatus 60 further includes:
a writing unit 603, configured to buffer, into a weight buffer weight buffer of the AI hardware accelerator, the first parameter set included in the matrix blocks corresponding to the first index value, so that the AI hardware accelerator performs an operation based on the first parameter set.

FIG. 10 is a diagram of a structure of another data processing apparatus according to an embodiment. The data processing apparatus 70 may be a chip or a system-on-chip. Specifically, the data processing apparatus 70 may include a device that can perform data processing, for example, a desktop computer, a tablet computer, a desktop, a laptop computer, a handheld computer, a notebook computer, an ultra-mobile personal computer (ultra-mobile personal computer, UMPC), a netbook, a cellular phone, a personal digital assistant (personal digital assistant, PDA), or an augmented reality (augmented reality, AR)/virtual reality (virtual reality, VR) device. In another implementation, the data processing apparatus may alternatively be all or some software/hardware apparatuses in an AI hardware accelerator.

The data processing apparatus 70 may include a processor 701, a data processing line 706, a memory 703, and some or all components of at least one data processing interface 702.

The processor 701 is configured to perform all or some of the steps performed by the data processing apparatus in the data processing method provided in FIG. 4 or FIG. 7 in this embodiment.

Specifically, the processor 701 may include a general-purpose central processing unit (central processing unit, CPU), and the processor 701 may further include a microprocessor, a field programmable gate array (Field Programmable Gate Array, FPGA), a digital signal processor (digital signal processor, DSP) or an application-specific integrated circuit (application-specific integrated circuit, ASIC), another programmable logic device, a discrete gate or a transistor logic device, a discrete hardware component, or the like.

During specific implementation, in an embodiment, the processor 701 may include one or more CPUs, for example, a CPU 0 and a CPU 1 in FIG. 10.

In addition, the memory 703 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory 703 may exist independently, and is connected to the processor 701 through the communication line 706. Alternatively, the memory 703 may be integrated with the processor 701.

The memory 703 stores computer instructions. The processor 701 may execute the computer instructions stored in the memory 703, to perform all or some of the steps in the data processing method provided in this embodiment.

Optionally, the computer-executable instructions in this embodiment may also be referred to as application code. This is not specifically limited in this embodiment.

In addition, the communication interface 702 uses any apparatus such as a transceiver, and is configured to communicate with another device or a communication network such as an Ethernet, a radio access network (radio access network, RAN), or a wireless local area network (wireless local area network, WLAN).

In addition, the communication line 706 is configured to connect components in the communication apparatus 70. Specifically, the communication line 706 may include a data bus, a power bus, a control bus, a status signal bus, and the like. However, for clear description, various buses are all marked as the communication line 706 in the figure.

In addition, the communication apparatus 70 may further include a storage medium 704. The storage medium 704 is configured to store computer instructions and various data for implementing the technical solutions of embodiments. Therefore, when performing the communication method in this embodiment, the communication apparatus 70 loads the computer instructions and the various data stored in the storage medium 704 into the memory 703, so that the processor 701 can execute the computer instructions stored in the memory 703 to perform the communication method provided in this embodiment.

It should be understood that the communication apparatus 70 according to this embodiment may correspond to the communication apparatus 40 in this embodiment, and may correspond to a corresponding body for executing the communication method according to this embodiment. In addition, the foregoing and other operations and/or functions of the modules in the communication apparatus 70 are respectively used to implement corresponding procedures of the methods in FIG. 4 or FIG. 7. For brevity, details are not described herein again.

The method steps in embodiments may be implemented in a hardware manner, or may be implemented in a manner of executing software instructions by the processor. The software instructions include corresponding software modules. The software modules may be stored in a RAM, a flash memory, a ROM, a PROM, an EPROM, an EEPROM, a register, a hard disk, a removable hard disk, a CD-ROM, or any other form of storage medium well-known in the art. For example, the storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a communication apparatus or a terminal device. Certainly, the processor and the storage medium may alternatively exist in the communication apparatus or the terminal device as discrete components.

All or some of the foregoing embodiments may be implemented by software, hardware, firmware, or any combination thereof. When the software is used to implement embodiments, all or some of embodiments may be implemented in a form of a computer program product. The computer program product includes one or more computer programs or instructions. When the computer programs or instructions are loaded and executed on a computer, all or some of the procedures or functions in embodiments are executed. The computer may be a general-purpose computer, a dedicated computer, a computer network, a communication apparatus, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc (digital video disc, DVD); or may be a semiconductor medium, for example, an SSD.

In embodiments, unless otherwise stated or there is a logic conflict, terms and/or descriptions in different implementations are consistent and may be mutually referenced, and technical features in different embodiments may be combined based on an internal logical relationship thereof, to form a new embodiment.

In embodiments, "at least one" means one or more, "a plurality of" means two or more, and other quantifiers are similar to the foregoing case. The term "and/or" describes an association relationship between associated objects and represents that three relationships may exist. For example, A and/or B may represent the following three cases: Only A exists, both A and B exist, and only B exists. In addition, an element (element) that appears in singular forms "a", "an", and "the" does not mean "one or only one" unless otherwise specified in the context, but means "one or more than one". For example, "a device" means one or more such devices. Further, "at least one of (at least one of)..." means one or any combination of subsequent associated objects. For example, "at least one of A, B, and C" includes A, B, C, AB, AC, BC, or ABC. In the text descriptions of embodiments, the character "/" usually indicates that the associated objects are in an "or" relationship. In a formula of embodiments, the character "/" indicates that the associated objects are in a "division" relationship.

## Claims

1. A data processing method, wherein the method comprises:
obtaining a parameter matrix of a convolutional neural network model;
partitioning the parameter matrix into a plurality of matrix blocks, wherein the plurality of matrix blocks comprise P types of matrix blocks with different content;
generating an index value of each matrix block in the P types of matrix blocks, wherein the index value uniquely indicates a corresponding matrix block; and
generating a parameter dictionary of the convolutional neural network model, wherein the parameter dictionary comprises the P types of matrix blocks and the index values respectively corresponding to the P types of matrix blocks.

2. The method according to claim 1, wherein the obtaining a parameter matrix of a convolutional neural network model comprises:
obtaining an original parameter matrix of the convolutional neural network model; and
retraining the original parameter matrix to obtain the parameter matrix of the convolutional neural network model that meets a constraint condition, wherein the constraint condition comprises that the parameter matrix can be partitioned into a plurality of matrix blocks, and the plurality of matrix blocks comprise matrix blocks with same content.

3. The method according to claim 1 or 2, wherein the method further comprises: determining a specification of the matrix block based on a specification of a hardware resource and difficulty of model training.

4. A data processing method, wherein the method is applied to an artificial intelligence AI hardware accelerator, and the method comprises:
obtaining a first index value; and
searching a parameter dictionary for matrix blocks corresponding to the first index value, wherein the parameter dictionary comprises P types of matrix blocks and index values respectively corresponding to the P types of matrix blocks, and each matrix block is a part of a parameter matrix of a convolutional neural network model.

5. The method according to claim 4, wherein the method further comprises:
splicing the matrix blocks corresponding to the first index value, to obtain a first parameter set of the convolutional neural network model.

6. The method according to claim 4 or 5, wherein the method further comprises: loading the parameter dictionary into an on-chip buffer of the AI hardware accelerator.

7. The method according to any one of claims 4 to 6, wherein the obtaining a first index value comprises: reading the first index value in an off-chip memory of the AI hardware accelerator.

8. The method according to any one of claims 4 to 7, wherein the method further comprises:
buffering, into a weight buffer weight buffer of the AI hardware accelerator, the first parameter set comprised in the matrix blocks corresponding to the first index value, so that the AI hardware accelerator performs an operation based on the first parameter set.

9. A data processing apparatus, comprising:
an obtaining unit, configured to obtain a parameter matrix of a convolutional neural network model;
a partitioning unit, configured to partition the parameter matrix into a plurality of matrix blocks, wherein the plurality of matrix blocks comprise P types of matrix blocks with different content;
an index generation unit, configured to generate an index value of each matrix block in the P types of matrix blocks, wherein the index value uniquely indicates a corresponding matrix block; and
a dictionary generation unit, configured to generate a parameter dictionary of the convolutional neural network model, wherein the parameter dictionary comprises the P types of matrix blocks and the index values respectively corresponding to the P types of matrix blocks.

10. The data processing apparatus according to claim 9, wherein that an obtaining unit is configured to obtain a parameter matrix of a convolutional neural network model comprises:
the obtaining unit is configured to obtain an original parameter matrix of the convolutional neural network model; and
the obtaining unit is configured to retrain the original parameter matrix to obtain the parameter matrix of the convolutional neural network model that meets a constraint condition, wherein the constraint condition comprises that the parameter matrix can be partitioned into a plurality of matrix blocks, and the plurality of matrix blocks comprise matrix blocks with same content.

11. The data processing apparatus according to claim 9 or 10, wherein the partitioning unit is further configured to determine a specification of the matrix block based on a specification of a hardware resource and difficulty of model training.

12. A data processing apparatus, wherein the data processing apparatus is used in an artificial intelligence AI hardware accelerator, and the data processing apparatus comprises:
an obtaining unit, configured to obtain a first index value; and
a searching unit, configured to search a parameter dictionary for matrix blocks corresponding to the first index value, wherein the parameter dictionary comprises P types of matrix blocks and index values respectively corresponding to the P types of matrix blocks, and each matrix block is a part of a parameter matrix of a convolutional neural network model.

13. The data processing apparatus according to claim 12, wherein the searching unit is further configured to splice the matrix blocks corresponding to the first index value, to obtain a first parameter set of the convolutional neural network model.

14. The data processing apparatus according to claim 12 or 13, wherein the obtaining unit is further configured to load the parameter dictionary into an on-chip buffer of the AI hardware accelerator.

15. The data processing apparatus according to any one of claims 12 to 14, wherein that an obtaining unit is configured to obtain a first index value comprises: the obtaining unit is configured to read the first index value in an off-chip memory of the AI hardware accelerator.

16. The data processing apparatus according to any one of claims 12 to 15, wherein the data processing apparatus further comprises:
a writing unit, configured to buffer, into a weight buffer weight buffer of the AI hardware accelerator, the first parameter set comprised in the matrix blocks corresponding to the first index value, so that the AI hardware accelerator performs an operation based on the first parameter set.

17. A communication apparatus, comprising a processor and an interface, wherein the processor receives or sends data through the interface, and the processor is configured to implement the method according to any one of claims 1 to 3, or the processor is configured to implement the method according to any one of claims 4 to 8.

18. A computer-readable storage medium, wherein the computer-readable storage medium stores instructions; and when the instructions are run on a processor, the method according to any one of claims 1 to 3 is implemented, or the method according to any one of claims 4 to 8 is implemented.
